# EUROPEAN PATENT SPECIFICATION

(11) **EP 0 322 055 B1**
(45) Date of publication and mention of the grant of the patent: **06.07.1994**
(21) Application number: 88202925.9
(22) Date of filing: 16.12.1988
(51) Int. Cl.: C08L 53/00, C08F 287/00, C09K 3/10

(54) **Sealant composition**
Siegelmittelzusammensetzungen
Composition d'enduit

(30) Priority: 23.12.1987 US 137036
(43) Date of publication of application: 28.06.1989
(73) Proprietor: SHELL INTERNATIONALE RESEARCH MAATSCHAPPIJ B.V., 2596 HR Den Haag (NL)
(72) Inventor: Chin, Steven Soohyun, Houston Texas 77083 (US)

(56) References cited:
- EP-A- 0 238 135
- US-A- 4 101 482
- DATABASE WPIL, accession no. 82-78178E [37], Derwent Publications Ltd, London,GB; & JP-A-57 128 762 (ASAHI CHEMICAL)

## Description

Numerous sealant compositions are known, for example, from U.S. patent specification No. 3,239,478, which shows combinations of styrene-diene block copolymers with tackifying resins to produce a wide variety of sealants and adhesives. Further, it is known that butyl rubbers can be used in a variety of adhesives, sealants and coatings. It is known that these butyl rubber compounds do not adhere well to polar substrates since the butyl rubber does not form strong chemical bonds to polar substrates.

A sealant composition which improves the adhesive qualities of the base block copolymer to polar substrates is described in U.S. patent specification No. 4,007,311. This composition covers a base formulation which comprises 5 to 50 weight per cent of a block copolymer, to which copolymer has been grafted a polymer of an acrylic ester, and from 95-50 weight per cent of a non-modified polymer such as for example polyurethanes, block copolymers, etc. The base copolymer is applied to the substrates in a solvent solution.

Hydrogenated block copolymers to which are grafted unsaturated, carboxylic acid containing monomers that are non polymerizable or slowly polymerizable are described in U.S. patent specification No. 4,578,429. These modified block copolymers were expected to improve the adhesion of the block copolymers to substrates when used in adhesives, sealants, and coatings.

It will be appreciated that there is still a growing need for improved sealant compositions, which meet the requirements of modern high tech applications and which could not be satisfied by the prior art compositions according to the hereinbefore described publications.

A sealant composition comprising a modified block copolymer component to which has been grafted carboxylic acid, dicarboxylic acid or derivatives thereof has now been found with improved adhesion to substrates and with adhesion resistant to deterioration in the presence of water.

Accordingly the invention provides a sealant composition which comprises at least:
a) 100 parts by weight of a functionalized polymer component which is prepared by grafting carboxylic acid, dicarboxylic acid, or a derivative thereof onto a polymer component in an amount from 0.5% to 5.0% by weight of the polymer component;
   said polymer component comprising a multiblock copolymer having at least two monoalkenyl arene polymer endblocks A and at least one substantially completely hydrogenated conjugated diene polymer midblock B, wherein the average molecular weight of the A blocks in the range of from 3000 to 40,000 and wherein the multiblock copolymer has a monoalkenyl arene content in the range of from 7% to 45% by weight; and
b) a midblock compatible component selected from the group consisting of a midblock compatible resin, a midblock compatible plasticizer and mixtures thereof in an amount up to 800 parts by weight when mixtures of midblock compatible components are present and up to 400 parts by weight when one midblock compatible component is present.

As already noted, the midblock compatible component is either a midblock compatible resin or a midblock compatible plasticizer or mixtures thereof. Up to 400 parts by weight of the midblock compatible component are present in the composition according to the invention. When mixtures of midblock compatible components are used, the total is included in the formulation at up 800 parts by weight. The amount of midblock compatible component is such that it is at a content to maintain the resultant composition in a pliable condition at room temperature and to maintain the glass transition temperature of the resultant composition below 10 °C.

The carboxylic acid containing polymer component comprises a multiblock copolymer having at least two endblocks A and at least one midblock B as described, wherein the average molecular weights of the A blocks are between 3000 and 40,000 and the multiblock copolymer has a monoalkenyl arene content in the range of from 7% to 45% by weight. The average molecular weight of the A blocks is such that it is greater than the minimum molecular weight needed to obtain microphase separation and domain formation of the A blocks, and is less than the maximum molecular weight which would render the polymer incapable of being melt processed. The monoalkenyl arene content is such that it is no more than the maximum weight per cent needed to retain a modulus suitable as a sealant in the resultant composition and no less than the minimum weight per cent needed to obtain the desired phase separation and the desired minimum cohesive strength. The preferred weight per cent of the monoalkenyl arene of the multiblock copolymer is in the range of from 10% to 30%wt.

The sealant may also contain an endblock compatible component at a concentration which is less than the solubility limit of the component in the functionalized polymer component with utility to maintain the cohesive qualities of the resultant sealant composition at elevated temperatures.

Additional components may be present in the sealant, including up to 900 parts by weight of a filler, an antioxidant, or an ultraviolet stabilizer or of a mixture of two to three of these additional components.

The term "functionalized polymer component" refers to a multiblock copolymer reacted with a carboxylic or dicarboxylic acid monomer or derivative thereof such as the copolymer described in U.S. patent specification No. 4,578,429. This specification discloses the preparation of the desired functionalized polymer component for example by reacting a hydrogenated styrene-butadiene-styrene (S-EB-S) block copolymer with a dicarboxylic acid or carboxylic acid monomer such as maleic acid or fumaric acid or derivatives thereof such as maleic anhydride in the presence of an organic peroxide that is capable of generating free radicals in the hydrogenated styrene-butadiene-styrene (S-EB-S) copolymer. The functionalized polymer component can be produced using the usual equipment for processing S-EB-S copolymers under normal processing conditions. The multiblock copolymer preferably contains in the range of from 10% to 30% by weight of monoalkenylarene, and preferably styrene. Accordingly, in a preferred embodiment of the present invention, the monoalkenyl arene used is styrene and the conjugated diene used is butadiene. A selectively hydrogenated linear polystyrene-polybutadiene-polystyrene block copolymer is very suitably applied as the backbone of the functionalized polymer component. It is preferred that the hydrogenated butadiene component of the functionalized polymer component has a 1,2-configuration content in the range of from 35 to 65 mol per cent.

The amount of the acid monomer grafted on the polymer component may vary between 0.5% to 5% by weight of the polymer component to obtain noticeable improvement in adhesion of the sealant composition without severely degrading the multiblock copolymer. An amount of from 1% to 3% by weight is preferred to provide good adhesion of the sealant composition. Accordingly, in a preferred embodiment of the present invention the functionalized polymer component is produced by grafting maleic acid, acrylic acid or maleic anhydride to the polymer in an amount in the range of from 1.0% to 3.0% by total weight of the polymer component.

The functionalized polymer component is prepared using a free radical generator which consists of an organic peroxide which can generate free radicals in a typical hydrogenated monoalkenylarene-conjugated diene-monoalkenylarene copolymer at a reaction temperature resulting in a half-life of not more than 6 min. and preferably less than 1 min at the reaction temperature. Typical examples of organo peroxides are dialkyl peroxides such as dicumyl peroxide and 1,3-bis(tert-butylperoxyisopropyl)benzene. Other peroxides such as diacyl peroxides, alkyl peresters and percarbonates may be suitable for initiating graft sites on the polymer.

The amount of free radical generator to be added to facilitate the functionalization of the polymer component depends on the properties (copolymer composition and melt index) of the monoalkenylarene-hydrogenated diene-monoalkenylarene multiblock copolymer used and the desired degree of crosslinking as well as on the type of free radical generator. Preferably the amount of free radical initiator added varies between 0.01% and 3.0% by weight of the polymer component, and more preferably between 0.05% and 1.5% by weight of the polymer component.

In the first step of preparing the sealant composition of the present invention, the reaction between the polymer component and carboxylic acid, dicarboxylic acid or derivatives thereof is executed in the temperature range between 140 °C up to the decomposition temperature of the polymer component. This reaction can be carried out in any appropriate device as long as an adequate dispersion of the added material and an adequate temperature of the kneaded material are achieved. For example, single or double screw extruders, the Ko-Kneader, the Banbury mixer or roll mills, may be used within the scope of the invention.

The functionalized block copolymer component by itself lacks the required adhesion needed for a sealant composition. Therefore, it is necessary to add an adhesion promoting or tackifying resin that is compatible with the elastomeric hydrogenated conjugated diene midblock of the block copolymer. A common tackifying resin is a diene-olefin copolymer of piperylene and 2-methyl-2-butene having a softening point of about 95 °C. This resin is available commercially under the tradename Wingtack 95, and is prepared by the cationic polymerization of 60% piperylene, 10% isoprene, 5% cyclopentadiene, 15% 2-methyl-2-butene and about 10% dimer, as taught in U.S. patent specification No. 3,577,398. Other tackifying resins of the same general type may be employed in which the resinous copolymer comprises 20-80 weight per cent of piperylene and 80-20 weight per cent of 2-methyl-2-butene. The resins normally have softening points (ring and ball) between about 80 °C and about 115 °C.

Other adhesion promoting resins which are also useful in the compositions of this invention include hydrogenated rosins, esters of rosins, polyterpenes, terpenephenol resins, and polymerized mixed olefins. To obtain good ultraviolet resistance, it is preferred that the tackifying resin is a saturated resin, for example, a hydrogenated dicyclopentadiene resin such as an Escorez 5000 (Escorez is a registered trade mark) series resin made by Exxon or a hydrogenated polystyrene or polyalphamethylstyrene resin such a Regalrez (Regalrez is a registered trade mark) resin made by Hercules.

Preferably the amount of adhesion promoting resin present in the sealant composition varies between 20 and 400 parts by weight per 100 parts by weight of the functionalized polymer component, more preferably between 10 and 350 parts by weight of the functionalized polymer component.

The sealant composition of the present invention may contain plasticizers compatible with the midblock of the multiblock copolymer, such as rubber extending plasticizers, rubber compounding oils and liquid resins.

Rubber compounding oils are well-known in the art and include both oils having a high content of saturates and oils having a high content of aromatics. Preferred plasticizers are highly saturated oils, for example Tufflo 6056 (Tufflo is a registered trade mark) made by Arco. Preferably the amount of rubber compounding oil finally present in the sealant composition may vary between 0 and 100 parts by weight per 100 parts by weight of the functionalized polymer component, more preferably between 0 and 60 parts by weight per 100 parts by weight of functionalized block copolymer.

Optionally, an endblock-compatible resin is present in the sealant composition. Compatibility is judged by the method disclosed in U.S. patent specification No. 3,917,607. Normally, the endblock-compatible resin should have a softening point above about 100 °C, as determined by ASTM method E28, using a ring and ball apparatus. Mixtures of endblock-compatible resins having high and low softening points may also be used. Useful endblock-compatible resins include coumarone-indene resins, polystyrene resins, vinyl toluene-alphamethylstyrene copolymers, and polyindene resins. An amorphous polyalphamethylstyrene resin is most preferred. The amount of endblock-compatible resin present in the sealant composition may vary between 0 and 200 parts by weight per 100 parts by weight of the functionalized polymer component.

The sealant compositions according to the present invention may be modified with supplementary materials including oxidation/ultraviolet stabilizers, pigments and fillers, such as calcium carbonate, talc, clay, aluminium trihydrate (an accelerator) or zinc oxide (a retarder).

In case the sealant composition is used as a hot melt, use of additional solvents or carriers is not required.

In case the sealant composition is used at ambient temperatures additional solvents are added. Suitable solvents include organic solvents such as hexanes, naphthas, mineral spirits, and toluene, ester solvents such as ethyl acetate and propyl acetate, and ketone solvents such as methyl ethyl ketone and methyl isobutyl ketone. Preferably the amount of solvent added to the sealant composition may vary between 0 and 400 parts by weight per 100 parts by weight of the functionalized polymer component, more preferably between 0 and 200 parts by weight per 100 parts by weight of the functionalized polymer component.

The sealants prepared and used in the following examples generally have the combination of properties which are normally found in relatively soft, elastomeric sealants. For example they have a Shore A hardness in the 10 to 50 range, preferably of about 25. The critical test which distinguishes sealants prepared by means of conventional technology from the sealants according to the present invention is the 180° peel test of the sealant on glass, on cold rolled steel, and on anodized aluminium. This test is run according to the testing procedure given in Federal Specification TT-S-00230C. Test samples made with the solvent based sealants were prepared according to the procedure given in TT-S-00230C, applying the sealant and curing it for 21 days prior to, testing.

The invention is further illustrated by means of the following example.

### EXAMPLE

Test samples made with the hot melt sealants were prepared according to the procedure given in TT-S-00230C except that the sealants were applied with a standard hot melt applicator. After the sealants cool, they are conditioned 24 hours at standard conditions before testing.

The polymers used to illustrate the invention are shown in Table 1. Polymer 1 is an unfunctionalized KRATON G1652 (KRATON is a registered trade mark) A-B-A type block polymer, available from Shell Chemical Co. where A is polystyrene and B is hydrogenated polybutadiene containing about 30% by weight of the polystyrene. The average molecular weight of KRATON G1652 is 7000/35,000/7000. Polymer 1 was included to illustrate the performance which can be achieved with technology known in the art. The polymers used to illustrate the present invention are polymers 2 and 3 in Table 1.

Polymers 2 and 3 have been functionalized by extruding the KRATON G1652 block polymer with a monomer and peroxide using a 30 mm corotating twin screw extruder. The temperature profile in the extruder during grafting varied from about 150 °C at the feed port to about 250 °C at the exit.

Results in Table 1 show the effectiveness of two different monomers grafted onto the KRATON G block polymer. Formulation 2 in Table 1 is based on KRATON G1652 block copolymer grafted with 1.2% by weight maleic anhydride, an anhydride derivative of maleic acid. Formulation 3 is based on KRATON G1652 block copolymer grafted with 1.6% by weight acrylic acid. Results show that carboxylic acid monomers and anhydride derivatives are effective in improving the adhesion of the sealant composition to the glass, steel, and aluminium substrates. Further, the functionalized block copolymers sufficiently improved the adhesion of the composition to aluminium to give cohesive failure of the composition rather than adhesive failure.

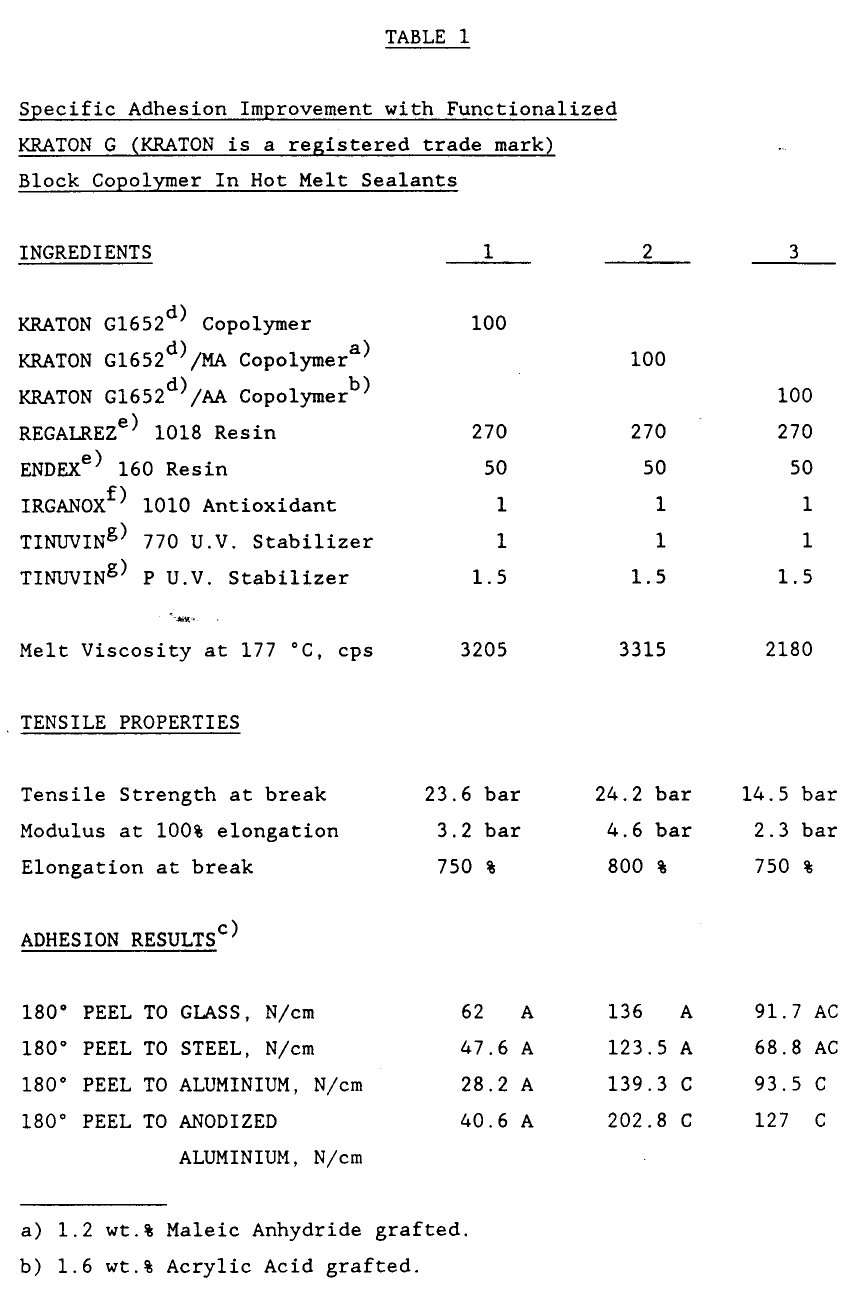

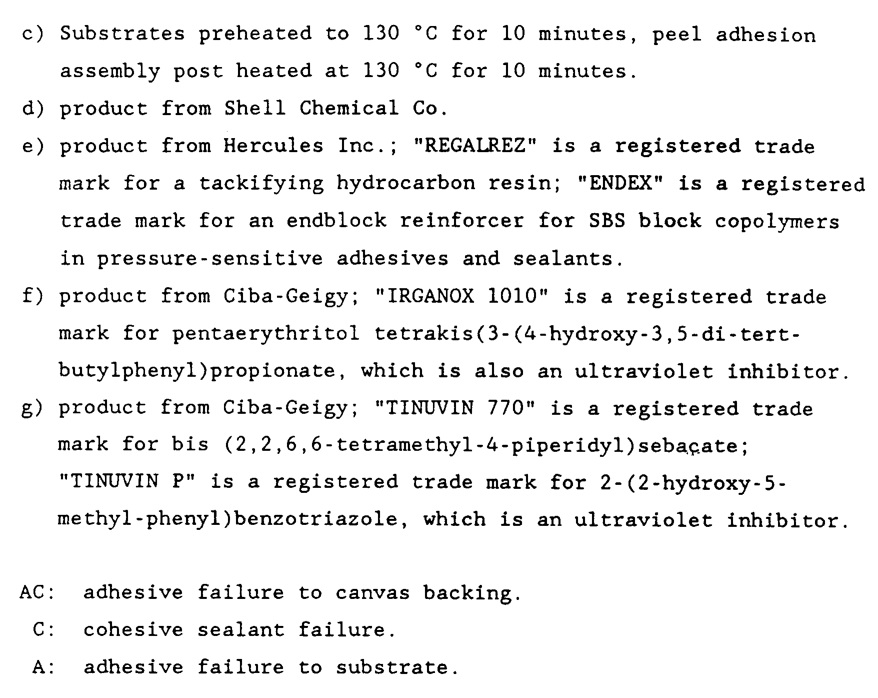

## Claims

1. A sealant composition which comprises at least:
(a) 100 parts by weight of a functionalized polymer component which is prepared by grafting carboxylic acid, dicarboxylic acid, or a derivative thereof onto a polymer component in an amount from 0.5% to 5.0% by weight of the polymer component;
said polymer component comprising a multiblock copolymer having at least two monoalkenyl arene polymer endblocks A and at least one substantially completely hydrogenated conjugated diene polymer midblock B, wherein the average molecular weight of the A blocks is in the range of from 3000 to 40,000, and wherein the multiblock copolymer has a monoalkenyl arene content in the range of from 7% to 45% by weight; and
(b) a midblock compatible component selected from the group consisting of a midblock compatible resin, a midblock compatible plasticizer and mixtures thereof in an amount up to 800 parts by weight when mixtures of midblock compatible components are present and up to 400 parts by weight when one midblock compatible component is present.

2. A composition as claimed in claim 1, wherein the multiblock copolymer has a monoalkenyl arene content in the range of from 10% to 30% by weight.

3. A composition as claimed in claim 1 or 2, wherein the monoalkenyl arene is styrene and the conjugated diene is butadiene.

4. A composition as claimed in claim 3, wherein the multiblock copolymer of the functionalized polymer component is a selectively hydrogenated linear polystyrene-polybutadiene-polystyrene block copolymer.

5. A composition as claimed in claim 3 or 4, wherein the hydrogenated butadiene component of the functionalized polymer component has a 1,2 configuration content in the range of from 35 to 65 mol per cent.

6. A composition as claimed in any of the preceding claims, wherein the functionalized polymer component is produced by grafting maleic acid, acrylic acid or maleic anhydride to the polymer in an amount in the range of from 1.0% to 3.0% by total weight of the polymer component.

7. A composition as claimed in any one of the preceding claims, which further comprises an endblock compatible resin in an amount of from 0 to 200 parts by weight per 100 parts by weight of the functionalized polymer component.

8. A composition as claimed in claim 7, wherein the endblock compatible resin is amorphous polyalphamethyl styrene.

9. A composition as claimed in any one of the preceding claims, which further comprises up to 900 parts by weight of a filler, an anti-oxidant, or an ultraviolet stabilizer or of a mixture of two to three of these additional components.

## Patentansprüche

1. Eine Versiegelungsmittelzusammensetzung, welche zumindest die nachstehenden Komponenten umfaßt:
a) 100 Gewichtsteile einer funktionalisierten Polymerkomponente, die durch Aufpfropfen einer Carbonsäure, einer Dicarbonsäure oder einem Derivat davon auf eine Polymerkomponente in einer Menge von 0,5 bis 5 Gew.%, bezogen auf die Polymerkomponente, hergestellt worden ist;
wobei besagte Polymerkomponente ein Mehrblock-Copolymerisat mit mindestens zwei Monoalkenylarenpolymer-Endblöcken A und mindestens einem im wesentlichen vollständig hydrierten Polymermittelblock B aus konjugiertem Dien umfaßt, wobei das Durchschnittsmolekulargewicht der Blöcke A im Bereich von 3000 bis 40000 liegt und das Mehrblock-Copolymerisat einen Gehalt an Monoalkenylaren im Bereich von 7 bis 45 Gew.% aufweist; und
b) eine mit dem Mittelblock verträgliche Komponente, welche ausgewählt ist aus der Gruppe, bestehend aus einem mit dem Mittelblock verträglichen Harz, einem mit dem Mittelblock verträglichen Weichmacher und Mischungen daraus, in einer Menge bis zu 800 Gewichtsteilen, falls Mischungen von mit dem Mittelblock verträglichen Komponenten vorliegen, und in einer Menge bis zu 400 Gewichtsteilen, wenn nur eine mit dem Mittelblock verträgliche Komponente vorliegt.

2. Eine Zusammensetzung, wie in Anspruch 1 beansprucht, in welcher das Mehrblockcopolymerisat einen Gehalt an Monoalkenylaren im Bereich von 10 bis 30 Gew.% aufweist.

3. Eine Zusammensetzung, wie in Anspruch 1 oder 2 beansprucht, in welcher das Monoalkenylaren Styrol und das konjugierte Diolefin Butadien ist.

4. Eine Zusammensetzung, wie in Anspruch 3 beansprucht, in welcher das Mehrblockcopolymerisat der funktionalisierten Polymerkomponente ein selektiv hydriertes, lineares Polystyrol-Polybutadien-Polystyrol-Blockcopolyinerisat ist.

5. Eine Zusammensetzung, wie in den Ansprüchen 3 oder 4 beansprucht, in welcher die hydrierte Butadienkomponente der funktionalisierten Polymerkomponente einen Gehalt an 1,2-Konfiguration im Bereich von 35 bis 65 Mol% aufweist.

6. Eine Zusammensetzung, wie in irgendeinem der vorhergehenden Ansprüche beansprucht, in welcher die funktionalisierte Polymerkomponente durch Aufpfropfen von Maleinsäure, Acrylsäure oder Maleinsäureanhydrid auf das Polymer in einer Menge von 1,0 bis 3 %, bezogen auf das Gesamtgewicht der Polymerkomponente, hergestellt worden ist.

7. Eine Zusammensetzung, wie in irgendeinem der vorhergehenden Ansprüche beansprucht, welche außerdem ein mit dem Endblock verträgliches Harz in einer Menge von 0 bis 200 Gewichtsteilen je 100 Gewichtsteile der funktionalisierten Polymerkomponente enthält.

8. Eine Zusammensetzung, wie in Anspruch 7 beansprucht, in welcher das mit dem Endblock verträgliche Harz amorphes Polyalpha-methylstyrol ist.

9. Eine Zusammensetzung, wie in irgendeinem der vorhergehenden Ansprüche beansprucht, welche außerdem bis zu 900 Gewichtsteilen eines Füllstoffes, eines Antioxidationsmittels oder eines UV-Stabilisators oder einer Mischung aus zwei bis drei dieser zusätzlichen Komponenten enthält.

## Revendications

1. Composition d'étanchéité, qui comprend au moins :
a) 100 parties en poids d'un composant polymère fonctionnalisé, qui est préparé par greffage d'acide carboxylique, d'acide dicarboxylique, ou d'un dérivé de ceux-ci, sur un composant polymère, en une quantité de 0,5% à 5,0% en poids du composant polymère ;
ledit composant polymère comprenant un copolymère multi-séquencé possédant au moins deux blocs terminaux polymères de monoalcénylarène A et au moins un bloc médian de polymère diénique conjugué pratiquement totalement hydrogéné B, dans lequel la masse moléculaire moyenne des blocs A est dans la gamme de 3 000 à 40 000 et dans lequel le copolymère multi-séquencé possède une teneur en monoalcénylarène dans la gamme de 7% à 45% en poids ; et
b) un composant compatible avec le bloc médian, choisi dans le groupe constitué par une résine compatible avec le médian, un plastifiant compatible avec le bloc médian et des mélanges de ceux-ci, en une quantité allant jusqu'à 800 parties en poids, lorsque sont présents des mélanges de composants compatibles avec le bloc médian, et jusqu'à 400 parties en poids, lorsqu'un composant compatible avec le bloc médian est présent.

2. Composition selon la revendication 1, dans laquelle le copolymère multi-séquencé possède une teneur en monoalcénylarène dans la gamme de 10% à 30% en poids.

3. Composition selon la revendication 1 ou 2, dans laquelle le monoalcénylarène est le styrène et le diène conjugué est le butadiène.

4. Composition selon la revendication 3, dans laquelle le copolymère multi-séquencé du composant polymère fonctionnalisé est un copolymère séquencé polystyrène-polybutadiène-polystyrène linéaire hydrogéné sélectivement.

5. Composition selon la revendication 3 ou 4, dans laquelle le composant butadiène hydrogéné du composant polymère fonctionnalisé a une teneur en configuration 1,2 dans la gamme de 35 à 65% en moles.

6. Composition selon l'une quelconque des revendications précédentes, dans laquelle le composant polymère fonctionnalisé est produit par greffage d'acide maléique, d'acide acrylique ou d'anhydride maléique au polymère, en une quantité dans la gamme de 1,0% à 3,0% du poids total du composant polymère.

7. Composition selon l'une quelconque des revendications précédentes, qui comprend en outre, une résine compatible avec le bloc terminal, en une quantité de 0 à 200 parties en poids pour 100 parties en poids du composant polymère fonctionnalisé.

8. Composition selon la revendication 7, dans laquelle la résine compatible avec le bloc terminal est un poly-α-méthylstyrène amorphe.

9. Composition selon l'une quelconque des revendications précédentes, qui comprend, en outre, jusqu'à 900 parties en poids d'une charge, d'un anti-oxydant ou d'un stabilisant UV, ou d'un mélange de deux ou trois de ces composants supplémentaires.
